**Europäisches Patentamt**

**European Patent Office**    (11) Numéro de publication: **0 210 210**

**Office européen des brevets**    **B1**

(19)

(12) **FASCICULE DE BREVET EUROPÉEN**

(45) Date de publication du fascicule du brevet:
23.11.88

(21) Numéro de dépôt: **86900792.2**

(22) Date de dépôt: **29.01.86**

(86) Numéro de dépôt international:
**PCT/FR 86/00025**

(87) Numéro de publication internationale:
**WO 86/04578 (14.08.86 Gazette 86/18)**

(51) Int. Cl.⁴: **C 07 C 99/00,** C 07 C 103/46,
C 07 C 101/28

(54) **PROCEDE DE FABRICATION DE LA L-PHENYLALANINE.**

(30) Priorité: **30.01.85 FR 8501276**

(43) Date de publication de la demande:
**04.02.87 Bulletin 87/6**

(45) Mention de la délivrance du brevet:
**23.11.88 Bulletin 88/47**

(84) Etats contractants désignés:
**AT BE CH DE FR GB IT LI LU NL SE**

(56) Documents cité:
**FR-A-2 550 201**

**Chemical Abstracts, vol. 100, no. 23, 4 June 1984, Columbus, Ohio, US, P. Petit et al.: "Preparation of chiral aminophosphine-phosphinites. Applications to asymmetric homogeneous catalysis", p. 512, abstract 191019d**
**Tetrahedron Letters, vol. 23, no. 29, 1982, Pergamon Press, Oxford, (GB9, E. Cesarotti et al.: "Asymmetric hydrogenation by chiral aminophosphine-phosphinite rhodium complexes", pp. 2995-2996**
**Journal of Organometallic Chemistry, vol. 251, 1983, Elsevier Sequoia S.A., Lausanne, (CH), E. Cesarotti et al.: "Asymmetric hydrogenation catalyzed by aminophosphine-phosphiniterhodium complexes derived from natural aminoalcohols and X-ray crystal structure of (1,5-cyclooctadiene)-(S)-**

(73) Titulaire: **NORSOLOR S.A., Tour Aurore Place des Reflets, F-92080 Paris la Defense Cédex 5 (FR)**

(72) Inventeur: **PETIT, Françis, 27, allée de la Clairière, F-59650 Villeneuve d'Ascq (FR)**

(74) Mandataire: **Dubost, Thierry, c/o NORSOLOR Service Propriété Industrielle B.P. 57, F-62670 Mazingarbe (FR)**

(56) Documents cité: (suite)
**N-(diphenylphosphino)-2-diphenylphosphino-xymethylpyrrolidinerhodium (I) perchlorate", pp. 79-91**

## Description

La présente invention concerne un procédé de fabrication de la L-phénylalanine permettant de façon simple d'obtenir ce produit sous une forme chimiquement et optiquement pure.

Il est connu de produire la L-phénylalanine, un intermédiaire important dans la synthèse de l'aspartame, par voie enzymatique ou bien à partir d'hydantoïne.

D'autre part E. CESAROTTI, A. CHIESA et al. ont décrit dans Journal of Organometallic Chemistry, Vol. 251 (1983), pp. 79-91, l'hydrogénation assymétrique, à 20°C et sous pression atmosphérique, de l'acide $\alpha$-N-acétaminocinnamique en présence d'un complexe cationique de formule Rh(COD)L C10$_4$ dans laquelle COD désigne le cyclooctadiène et L désigne le ligand N-(diphénylphosphino)-2-diphénylphosphinoxyméthylpyrrolidine. Toutefois le rendement optique en N-acétyl-(S)-phénylalanine atteint dans ces conditions est limité à 78 % et l'on se trouve alors à nouveau confronté au difficile problème de séparation de diastéréoisomères.

Le but de la présente invention consiste par conséquent à obtenir de façon simple la L-phénylalanine sous une forme chimiquement et optiquement pure.

Le procédé objet de la présente invention consiste à hydrogéner l'acide acétamidocinnamique en présence d'un complexe d'un métal M du groupe VIII de la Classification Périodique puis à hydrolyser le produit résultant de la réaction d'hydrogénation et il est caractérisé en ce que la réaction d'hydrogénation est effectuée en présence d'un solvant, sous pression supérieure ou égale à la pression atmosphérique, à une température de -50°C à +10°C, pendant une durée inférieure ou égale à 300 minutes, le rapport molaire de l'acide acétamidocinnamique audit métal étant supérieur ou égal à 100, le complexe de métal M étant choisi parmi d'une part ceux de formule MZ$_{q-r}$L$_r$ et d'autre part ceux de formule (MZ$_{q-r}$L$_r$)+A$^-$, dans lesquelles r est égal à 1 ou 2, q est le degré de coordination du métal M, Z est un atome ou une molécule capable de complexer le métal M, A$^-$ est un anion peu coordinant et stériquement encombré et L est un ligand phosphoré chiral choisi parmi ceux de formule:

FIG00/30

dans laquelle:

-W est un radical dihydrocarbylphosphinoxy de formule W = OP(R)$_2$ dans laquelle R est un radical hydrocarboné choisi parmi les radicaux alkyles, aryles et cycloalkyles,

-R$_1$ est choisi parmi l'atome d'hydrogène et les radicaux hydrocarbonés,

-R$_3$ et R$_4$, nécessairement différents l'un de l'autre, sont choisis parmi l'atome d'hydrogène et les radicaux hydrocarbonés éventuellement porteurs d'au moins une fonction choisie parmi les fonctions alcool, thiol, thioéther, amine, imine, acide, ester, amide et éther, et

-R$_5$ et R$_6$ sont choisis parmi l'atome d'hydrogène et les radicaux hydrocarbonés éventuellement fonctionnalisés.

Ces complexes se forment par réaction entre un complexe de formule MZ$_q$ d'une part et un ligand L d'autre part, le cas échéant en présence d'au moins un acide ou sel possédant un anion A$^-$. Ils peuvent être identifiés notamment à l'aide de leur spectre de résonance magnétique nucléaire du phosphore 31. Le tableau I ci-après résume les données d'identification de certains complexes de formule

Rh (Norbornadiène) (L)$_+$ C10$_4$$^-$

selon la nature du ligand L.

## TABLEAU I

| Ligand n° | 1 | 2 | 3 | 5 | 6 |
|---|---|---|---|---|---|
| 31 | 120,9 | 122,4 | 110,4 | 122,8 | 110,7 |
| $\delta$ P | 90,8 | 95,3 | 96,8 | 71,5 | 85,5 |

| Ligand n° | 7 | 8 | 9 | 10 |
|---|---|---|---|---|
| 31 | 119,5 | 119,5 | 118,8 | 116,7 |
| $\delta$ P | 87,3 | 88,8 | 87,8 | 88,5 |

Dans le cadre du procédé selon l'invention le rapport molaire de l'acide acétamidocinnamique au métal M est de préférence compris entre 100 et 300.

Les ligands L utilisés dans le cadre de la présente invention constituent la famille des aminophosphinephosphinites. Des exemples de radical R sont notamment les radicaux méthyle, éthyle, isopropyle, tertiobutyle, cyclohexyle et phényle. L'exemple le plus fréquent de radical hydrocarboné $R_1$ est le radical méthyle.

Par anion A⁻ coordinant et stériquement encombré on entend notamment les anions perchlorate, tétrafluoro- et tétraphénylborate, hexafluorophosphate. Parmi les métaux M couramment utilisables on peut citer le fer, le nickel, le cobalt, le rhodium, le ruthénium, l'iridium, le palladium, le platine. Parmi les atomes ou molécules Z couramment utilisables on peut citer le monoxyde de carbone, les halogènes, l'éthylène, le norbornadiène, le cyclooctadiène, l'acétylacétone. Enfin le degré de coordination q peut être couramment compris entre 2 et 6 inclusivement selon le métal et/ou les ligands utilisés.

Les ligands L peuvent être fabriqués par un procédé consistant à faire réagir dans un solvant hydrocarboné, à une température comprise entre -50° C et 80° C et sous atmosphère de gaz inerte un aminoalcool optiquement actif de formule générale

FIG00/25

avec au moins un composé de formule $P(R)_2$ Y dans laquelle Y est choisi parmi les atomes d'halogène et les radicaux amines, ledit composé étant dans un rapport molaire, relativement à l'aminoalcool, supérieur ou égal à 2. Des solvants hydrocarbonés préférés sont le benzène ou le toluène. Pour la synthèse des ligands L on préfère utiliser un composé dans lequel Y est un atome d'halogène. Pour faciliter l'élimination de l'hydrure d'halogène formé par la réaction, on peut alors avantageusement conduire celle-ci en présence d'un excès d'amine tertiaire, telle que par exemple la triéthylamine, qui précipitera sous forme d'halogènohydrate. Le ligand phosphoré chiral est isolé successivement par filtration du précipité suivie d'évaporation du solvant hydrocarboné sous vide. Il se présente généralement sous forme d'une huile visqueuse. Les aminoalcools chiraux de formule (II) sont le plus souvent des produits soit commerciaux soit facilement accessibles par réduction d'aminoacides naturels (ou de leurs esters méthyliques formylés). Lorsque le radical $R_3$ ou $R_4$ de l'aminoalcool de formule (II) est porteur d'une fonction, celle-ci peut être introduite par une réaction de fonctionnalisation bien connue, par exemple la fonction ester sera introduite par estérification de la fonction acide correspondante (cas des carbalcoxy hydroxyprolines). A titre d'exemples on peut citer le prolinol, l'hydroxyproline, les éphédrines et les aminoacools N-méthylés dérivés des aminoacides naturels suivants: phénylglycine, phénylalanine, leucine, valine, alanine.

Les ligands L peuvent être identifiés notamment à l'aide de leurs spectres de résonance magnétique nucléaire du proton, du carbone 13 et du phosphore 31, ainsi que de leur pouvoir rotatoire spécifique. Le tableau II ci-après résume les données d'identification de certains aminophosphinephosphinites, dans lesquels R est le radical phényle, selon l'aminoalcool ou l'aminoacide dont ils sont issus. Dans ce tableau $(\alpha)^{25}_D$ désigne le pouvoir rotatoire spécifique à 25°C exprimé en degrés pour la raie D et δ désigne le déplacement chimique exprimé en ppm par rapport à l'acide phosphorique (cas du phosphore 31) ou au tétraméthylsilane (cas du proton et du carbone 13). Les notations (m), (dd), (d) et (s) désignent respectivement un multiplet, un double doublet, un doublet et un singulet.

Comme il est usuel pour une réaction d'hydrogénation de substrats organiques insaturés tels que l'acide acétamidocinnamique, l'hydrogène est utilisé en quantité stoechiométrique par rapport audit acide et la pression est généralement comprise entre 1 et 200 bars inclusivement.

La réaction d'hydrogénation selon l'invention permet d'obtenir, avec un excellent rendement chimique, la N'acétyl-(S)-phénylalanine avec un rendement optique généralement supérieur ou égal à 85 %. De plus une variante du procédé selon l'invention, consistant à soumettre, avant hydrolyse, le produit résultant de ladite réaction d'hydrogénation à au moins une recristallisation dans l'éthanol permet d'améliorer de façon spectaculaire le rendement optique en N'acétyl-(S)-phénylalanine. Selon cette variante un rendement optique au moins égal à 99 % peut être aisément atteint.

Les exemples suivants sont donnés à titre illustratif et non limitatif de la présente invention.

## EXEMPLE 1

On fait réagir dans le benzène sec, à une température de +5°C et sous atmosphère d'azote, 2 moles de chlorodiphénylphosphine avec 1 mole de S (+) prolinol (rendu anhydre par distillation azéotropique de l'eau par le benzène) en présence d'un excès de triéthylamine. On filtre le précipité de chlorhydrate de triéthylammonium qui se forme, puis on évapore le benzène sous vide. Une recristallisation effectuée dans le benzène permet d'éliminer un sous-produit identifié comme la méthylamino bis (diphénylphosphine): l'analyse par résonance magnétique nucléaire du proton révèle en effet des déplacements chimiques δ à 7,6 et 3,5 ppm par rapport au tétraméthylsilane. On obtient alors 0,8 mole du ligand n° 5 (voir tableau II), de pureté chimique évaluée à 95 %.

**TABLEAU II**

| Ligand n° | Précurseur aminoalcool ou aminoacide | Nom du ligand | 31 δ P | 13 δ C | 1 δ H | 25 (α) D |
|---|---|---|---|---|---|---|
| 1 | Ephédrine érythro(+) | (1R,2S)phényl-1-(oxydiphénylphosphino)-1-(N-méthyl-N diphenylphosphine amino)-2-méthyl-2-éthane | 111,1 63,8 | 129-134(m) 86,9(dd) 65,8(dd) 31,8(d) 17,1(d) | 7-8 4,8 4,0 2,2 1,3 | -60,5 |
| 2 | Ephédrine thréo (-) | (1R,2R) phényl-1-(oxydiphénylphosphino)-1-(N-méthyl-N diphénylphosphine amino)-2-méthyl-2-éthane | 110,5 63,7 | 129-130(m) 86,8(dd) 66,2(dd) 31,0(d) 16,6(d) | 7-8 4,95 4,0 2,3 1,15 | -16,1 |
| 3 | Carbéthoxyhydroxy-proline | (2S,4R)-N-diphénylphosphino-carbethoxy-2-(oxydiphénylphosphino)-4-pyrrolidine | 108,4 46,3 | | | -96,2 |
| 4(a) | Prolinol | N-dicyclohexylphosphino-(oxyméthylène dicyclohexylphosphino)-2-pyrrolidine | 146,5 53,9 | 74,9(m) 64,4(dd) 47,2(d) 23-30(m) 24,4(s) | | -37,4 |
| 5 | Prolinol (+) | (S)N-diphénylphosphino-(oxyméthylène diphénylphosphino)-2-pyrrolidine | 113,5 45,6 | 128-133(m) 73,1(dd) 63,8(dd) 47,2(d) 29,6(d) 25,4(s) | 7,1-8 3,3-4 3,05 2,07 1,5-2,1 | +22,0 (b) |
| 6 | Phényglycine D (-) | (S)(oxydiphénylphosphino)-1-(N-méthyl-N-diphénylphosphine amino)-2-phényl-2-éthane | 114,9 59,3 | 127-133(m) 69,5(dd) 68,7(dd) 33,4(d) | 7,2 4,3 4,2 2,3 | -3,7 |
| 7 | Alanine | (S)(oxydiphénylphosphino)-1-(N-méthyl-N-diphénylphosphine amino)-2-methyl-2-éthane | 113,2 58,1 | 125-136(m) 72,6(dd) 61,0(dd) 32,5(d) 16,8(d) | | +23,7 |

(a) dans ce ligand. R est le radical cyclohexyle
(b) valeur mesurée pour la raie à 402 nm au lieu de la raie D.

**TABLEAU II (Suite)**

| Ligand n° | Précurseur aminoalcool ou aminoacide | Nom du ligand | 31 δ P | 13 δ C | 25 (α) D |
|---|---|---|---|---|---|
| 8 | Valine | (S)(oxydiphénylphosphino)-1-(N-méthyl -N-diphénylphosphine amino)-2-isopropyl- 2-éthane | 114,3 62,0 | 127-134(m) 73,1(dd) 71,1(dd) 33,5(d) 29,0 21,35 21,3 | +4,4 |
| 9 | Leucine | (S)(oxydiphénylphosphino)-1-(N-méthyl -N-diphénylphosphine amino)-2-isobutyl- 2-éthane | 113,8 59,5 | 126-142(m) 72,2(dd) 64,0(dd) 39,8(d) 32,2(d) 24,6 23,5 21,9 | +15,4 |
| 10 | Phénylalanine | (S)(oxydiphénylphosphino)-1-(N-méthyl -N-diphénylphosphine amino)-2-benzyl- 2-éthane | 114,2 60,0 | 126-140(m) 71,7(dd) 66,8(dd) 37,5(d) 32,7(d) | +1,1 |

**EXEMPLE 2- Synthèse du complexe de rhodium**

A 1 millimole de complexe $Rh_2(Norbornadiène)_2Cl_2$ dissous dans 50 cm³ de méthanol contenant 1 millimole du ligand L obtenu à l'exemple 1 on ajoute, sous azote et à 20°C, 1,1 millimole de perchlorate d'argent. Après 15 minutes d'agitation, on filtre le précipité de chlorure d'argent. Le filtrat est évaporé, lavé au benzène sous azote, puis à l'éther éthylique puis séché sous vide. Les cristaux du complexe ionique [Rh(Norbornadiène)L]⁺ $C10_4^-$ sont ainsi récupérés avec un rendement supérieur à 80 %. Le spectre de résonance magnétique nucléaire du phosphore 31 de ce complexe figure au tableau I ci-avant.

**EXEMPLES 3 à 5**

0,5 millimole du complexe ionique de l'exemple 2, dissous dans 50 cm³ d'éthanol à 95 %, est transféré sous hydrogène dans un réacteur préalablement purgé contenant 0,1 mole d'acide acétamidocinnamique dissous dans 400 cm³ d'éthanol à 95%. On introduit de l'hydrogène dans le réacteur et la réaction est suivie par lecture du volume d'hydrogène absorbé. Pour chaque exemple la température T (exprimée en degrés Celsius) et la durée t (exprimée en minutes) de la réaction sont mentionnées au tableau III ci-après. A la fin de la réaction, l'éthanol est évaporé, le résidu est repris à l'eau chaude puis on filtre pour séparer le complexe insoluble. L'eau est évaporée et on récupère alors, avec un rendement chimique de 98%, la N-acétyl-(S)phénylalanine. La mesure de son pouvoir rotatoire spécifique $(\alpha)^{25}_D$ sur une solution aqueuse de concentration 20 g/l permet le calcul du rendement optique R.O. (exprimé en %) indiqué au tableau III ci-après en fonction des conditions réactionnelles.

**TABLEAU III**

| Exemple | T(°C) | t | R.O. |
|---|---|---|---|
| 3 | +10 | 35 | 86 |
| 4 | 0 | 40 | 95 |
| 5 | -20 | 120 | 89 |

**EXEMPLE 6**

Le produit résultant de la réaction d'hydrogénation de l'exemple 3 est soumis à une opération de recristallisation dans l'éthanol, à l'issue de laquelle la pureté optique atteint 99,4 %.

**Revendications**

1. Procédé de fabrication de la L-phénylalanine consistant à hydrogéner l'acide acétamidocinnamique en présence d'un complexe d'un métal M du groupe VIII de la Classification Périodique puis à hydrolyser le produit résultant de la réaction d'hydrogénation, caractérisé en ce que la réaction d'hydrogénation est effectuée en présence d'un solvant, sous pression supérieure ou égale à la pression atmosphérique, à une température de -50°C à +10°C, pendant une durée inférieure ou égale à 300 minutes, le rapport molaire de l'acide acétamidocinnamique audit métal étant supérieur ou égal à 100, le complexe de métal M étant choisi parmi d'une part ceux de formule $MZ_{q-r}L_r$ et d'autre part ceux de formule $(MZ_{q-r}L_r)^+A^-$, dans lesquelles r est égal à 1 ou 2, q est le degré de coordination du métal M, Z est un atome ou une molécule capable de complexer le métal M, $A^-$ est un anion peu coordinant et stériquement encombré et L est un ligand phosphoré chiral choisi parmi ceux de formule:

FIG00/30

dans laquelle:
- W est un radical dihydrocarbylphosphinoxy de formule $W = OP(R)_2$ dans laquelle R est un radical hydrocarboné choisi parmi les radicaux alkyles, aryles et cycloalkyles,
- $R_1$ est choisi parmi l'atome d'hydrogène et les radicaux hydrocarbonés,
- $R_3$ et $R_4$, nécessairement différents l'un de l'autre, sont choisis parmi l'atome d'hydrogène et les radicaux hydrocarbonés éventuellement porteurs d'au moins une fonction choisie parmi les fonctions alcool, thiol, thioéther, amine, imine, acide, ester, amide et éther, et
- $R_5$ et $R_6$ sont choisis parmi l'atome d'hydrogène et les radicaux hydrocarbonés éventuellement fonctionnalisés.

2. Procédé selon la revendication 1, caractérisé en ce que l'anion $A^-$ est choisi parmi les anions perchlorate, tétrafluoroborate, tétraphénylborate et hexafluorophosphate.

3. Procédé selon l'une des revendications 1 et 2, caractérisé en ce que le métal M est choisi parmi le fer, le nickel, le cobalt, le rhodium, le ruthénium, l'iridium, le palladium et le platine.

4. Procédé selon l'une des revendications 1 à 3, caractérisé en ce que l'atome ou molécule Z est choisi parmi le monoxyde de carbone, les halogènes, l'éthylène, le norbornadiène, le cyclooctadiène, et l'acétylacétone.

5. Procédé selon l'une des revendications 1 à 4, caractérisé en ce que le degré de coordination q est compris entre 2 et 6.

6. Procédé selon l'une des revendications 1 à 5, caractérisé en ce que le ligand L est la (S)N-diphénylphosphino-(oxyméthylène diphénylphosphino)-2 pyrrolidine.

7. Procédé selon l'une des revendications 1 à 6, caractérisé en ce que le rapport molaire de l'acide acétomidocinnamique audit métal est compris entre 100 et 300.

8. Procédé selon l'une des revendications 1 à 7, caractérisé en ce que, avant hydrolyse, le produit résultant de ladite réaction d'hydrogénation est soumis à au moins une recristallisation dans l'éthanol.

**Patentansprüche**

1. Verfahren zur Herstellung von L-Phenylalanin, welches darin besteht, daß Acetamidozimtsäure in Gegenwart eines Komplexes eines Metalls M der Gruppe VIII des Periodensystems hydriert wird und danach das aus der Hydrierungsreaktion resultierende Produkt hydrolysiert wird, dadurch gekennzeichnet, daß die Hydrierungsreaktion in Gegenwart eines Lösungsmittels, unter einem Druck der höher ist als der oder gleich ist dem Atmosphärendruck, bei einer Temperatur von -50°C bis +10°C und während einer Dauer, die geringer als oder gleich 300 Minuten ist, erfolgt, wobei das Molverhältnis der Acetamidozimtsäure zum genannten Metall größer als oder gleich 100 ist, der Komplex des Metalls M einerseits aus den Komplexen der Formel $MZ_{q-r}L_r$ und anderseits aus den Komplexen der Formeln $(MZ_{q-r}L_r)^+A^-$ ausgewählt ist, in welcher r gleich 1 oder 2 ist, q die Koordinationszahl des Metalls M ist, Z ein zur Komplexbildung des Metalls M fähiges Atom oder Molekül ist, A- ein wenig koordinierendes und sterisch behindertes Anion ist und L ein chiraler phosphorhaltiger Ligand ist, der ausgewählt ist aus jenen der Formel:

FIG00/25

in der
- W ein Dihydrocarbylphosphinoxy-Radikal der Formel W = OP(R)$_2$ ist, in der R ein Kohlenwasserstoffradikal ist, das ausgewählt ist aus der Gruppe bestehend aus den Alkyl-, Aryl- und Cykloalkylradikalen,
- R$_1$ ausgewählt ist aus der Gruppe bestehend aus dem Wasserstoffatom und den Kohlenwasserstoffradikalen,
- R$_3$ und R$_4$, die notwendigerweise untereinander verschieden sind, ausgewählt sind aus der Gruppe bestehend aus dem Wasserstoffatom und den Kohlenwasserstoffradikalen, die gegebenenfalls Träger mindestens einer Funktion sind, die ausgewählt ist aus der Gruppe bestehend aus den Alkohol-, Thiol-, Thioäther-, Amin-, Imin, Säure-, Ester-, Amid- und Ätherfunktionen, und
- R$_5$ und R$_6$ ausgewählt sind aus der Gruppe bestehend aus dem Wasserstoffatom und den gegebenenfalls funktionalisierten Kohlenwasserstoffradikalen.

2. Verfahren nach Anspruch 1, dadurch gekennzeichnet, daß das Anion A$^-$ ausgewählt ist aus den Perchlorat-, Tetrafluorborat-, Tetraphenylborat- und Hexafluorphosphat-Anionen.

3. Verfahren nach Anspruch 1 oder 2, dadurch gekennzeichnet, daß das Metall M ausgewählt ist aus der Gruppe bestehend aus Eisen, Nickel, Kobalt, Rhodium, Ruthenium, Iridium, Palladium und Platin.

4. Verfahren nach einem der Ansprüche 1 bis 3, dadurch gekennzeichnet, daß das Atom oder Molekül Z ausgewählt ist aus der Gruppe bestehend aus Kohlenmonoxid, den Halogenen, Äthylen, Norbornadien, Cyclooctadien und Acetylaceton.

5. Verfahren nach einem der Ansprüche 1 bis 4, dadurch gekennzeichnet, daß die Koordinationszahl zwischen 2 und 6 beträgt.

6. Verfahren nach einem der Ansprüche 1 bis 5, dadurch gekennzeichnet, daß der Ligand L (S)N-Diphenylphosphino-(oxymethylen diphenylphosphino)-2 pyrrolidin ist.

7. Verfahren nach einem der Ansprüche 1 bis 6, dadurch gekennzeichnet, daß das Molverhältnis der Acetamidozimtsäure zum genannten Metall zwischen 100 und 300 beträgt.

8. Verfahren nach einem der Ansprüche 1 bis 7, dadurch gekennzeichnet, daß das aus der genannten Hydrierungsreaktion resultierende Produkt vor der Hydrolyse mindestens einer Rekristallisation in Äthanol unterworfen wird.

## Claims

1. Process for manufacturing L-phenylalanine, consisting in hydrogenating acetamidocinnamic acid in the presence of a complex of a metal M of group VIII of the Periodic Classification and then in hydrolysing the product resulting from the hydrogenation reaction, characterized in that the hydrogenation reaction is performed in the presence of a solvent, under pressure greater than or equal to atmospheric pressure, at a temperature from -50°C to +10°C, for a time less than or equal to 300 minutes, the molar ratio of acetamidocinnamic acid to the said metal being higher than or equal to 100, the complex of metal M being chosen from, on the one hand, those of formula $MZ_{q-r}L_r$, and, on the other hand, those of formula $(MZ_{q-r}L_r)^+A^-$, in which formulae r is equal to 1 or 2, q is the degree of co-ordination of the metal M, Z is an atom or molecule capable of complexing the metal M, A$^-$ is an anion with little co-ordinating power and sterically hindered and L is a chiral phosphorus-containing ligand chosen from those of formula:

FIG00/30

in which:
W is a di(hydrocarbon-substituted) phosphinoxy radical of formula W = OP(R)$_2$, in which R is a hydrocarbon radical chosen from alkyl, aryl and cycloalkyl radicals,
R$_1$ is chosen from a hydrogen atom and hydrocarbon radicals,
R$_3$ and R$_4$, which are necessarily different from one another, are chosen from a hydrogen atom and hydrocarbon radicals optionally bearing at least one functional group chosen from alcohol, thiol, thioether, amine, imine, acid, ester, amide and ether groups, and
R$_5$ and R$_6$ are chosen from a hydrogen atom and hydrocarbon radicals, optionally functionalized.

2. Process according to Claim 1, characterized in that the anion A⁻ is chosen from perchlorate, tetrafluoroborate, tetraphenylborate and hexafluorophosphate anions.

3. Process according to one of claims 1 and 2, characterized in that the metal M is chosen from iron, nickel, cobalt, rhodium, ruthenium, iridium, palladium and platinum.

4. Process according to one of Claims 1 to 3, characterized in that the atom or molecule Z is chosen from carbon monoxide, halogens, ethylene, norbornadiene, cyclooctadiene and acetylacetone.

5. Process according to one of Claims 1 to 4, characterized in that the degree of co-ordination q is between 2 and 6.

6. Process according to one of Claims 1 to 5, characterized in that the ligand L is (S)N-diphenylphosphino-2-(oxymethylenediphenylphosphino)pyrrolidine.

7. Process according to one of Claims 1 to 6, characterized in that the molar ratio of acetomidocinnamic acid to the said metal is between 100 and 300.

8. Process according to one of Claims 1 to 7, characterized in that, before hydrolysis, the product resulting from the said hydrogenation reaction is subjected to at least one recrystallization in ethanol.